(19)

**Europäisches Patentamt**
**European Patent Office**
**Office européen des brevets**

(11) **EP 4 128 053 B1**

(12) **EUROPEAN PATENT SPECIFICATION**

(45) Date of publication and mention
of the grant of the patent:
**22.04.2026 Bulletin 2026/17**

(21) Application number: **20731668.8**

(22) Date of filing: **18.05.2020**

(51) International Patent Classification (IPC):
$G06N\ 3/082$ (2023.01)      $G06N\ 3/088$ (2023.01)
$G06N\ 3/045$ (2023.01)      $G06N\ 3/0464$ (2023.01)
$G06N\ 3/047$ (2023.01)      $G06N\ 3/0475$ (2023.01)
$G06N\ 3/0495$ (2023.01)      $G06N\ 3/09$ (2023.01)
$G06N\ 3/094$ (2023.01)      $G06N\ 3/096$ (2023.01)
$G06N\ 7/01$ (2023.01)

(52) Cooperative Patent Classification (CPC):
**G06N 3/088; G06N 3/045; G06N 3/0464;**
**G06N 3/047; G06N 3/0475; G06N 3/0495;**
**G06N 3/082; G06N 3/09; G06N 3/094; G06N 3/096;**
G06N 7/01

(86) International application number:
**PCT/US2020/033404**

(87) International publication number:
**WO 2021/236051 (25.11.2021 Gazette 2021/47)**

(54) **FEW-SHOT DOMAIN ADAPTATION IN GENERATIVE ADVERSARIAL NETWORKS**

FEW-SHOT-DOMÄNENANPASSUNG IN GENERATIVEN KONTRADIKTORISCHEN NETZWERKEN

ADAPTATION DE DOMAINE EN PEU DE PRISES DE VUES DANS DES RÉSEAUX
ANTAGONISTES GÉNÉRATIFS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**08.02.2023 Bulletin 2023/06**

(73) Proprietor: **Google LLC**
**Mountain View, CA 94043 (US)**

(72) Inventors:
• **CHU, Wen-Sheng**
**Mountain View, California 94043 (US)**
• **ROBB, Esther**
**Mountain View, California 94043 (US)**
• **KUMAR, Abhishek**
**Mountain View, California 94043 (US)**

(74) Representative: **Varley, James Richard et al**
**Venner Shipley LLP**
**200 Aldersgate**
**London EC1A 4HD (GB)**

(56) References cited:
**EP-A1- 3 629 250**

• YAXING WANG ET AL: "Transferring GANs:
generating images from limited data",
ARXIV.ORG, CORNELL UNIVERSITY LIBRARY,
201 OLIN LIBRARY CORNELL UNIVERSITY
ITHACA, NY 14853, 4 May 2018 (2018-05-04),
XP081421451
• YONGJUN HONG ET AL: "How Generative
Adversarial Networks and Their Variants Work:
An Overview", ARXIV.ORG, CORNELL
UNIVERSITY LIBRARY, 201 OLIN LIBRARY
CORNELL UNIVERSITY ITHACA, NY 14853, 16
November 2017 (2017-11-16), XP081036180, DOI:
10.1145/3301282
• ALCEU BISSOTO ET AL: "The Six Fronts of the
Generative Adversarial Networks", ARXIV.ORG,
CORNELL UNIVERSITY LIBRARY, 201 OLIN
LIBRARY CORNELL UNIVERSITY ITHACA, NY
14853, 29 October 2019 (2019-10-29),
XP081522380

**(Cont. next page)**

EP 4 128 053 B1

- **SIVAN DOVEH ET AL: "MetAdapt: Meta-Learned Task-Adaptive Architecture for Few-Shot Classification", ARXIV.ORG, CORNELL UNIVERSITY LIBRARY, 201 OLIN LIBRARY CORNELL UNIVERSITY ITHACA, NY 14853, 1 December 2019 (2019-12-01), XP081542986**

**Description**

FIELD

The present disclosure relates generally to domain adaptation. More particularly, the present disclosure relates to few-shot domain adaptation in generative adversarial networks.

BACKGROUND

Image synthesis is the task of generating novel images by learning the distribution of a dataset. In addition to pure visual synthesis applications, it is useful as a tool for data augmentation, to improve the performance of other models on rare or difficult-to-collect data.

Generative adversarial models (GANs) have demonstrated increasingly impressive performance in image synthesis tasks. However, these models are sample-inefficient, typically requiring thousands or millions of images to produce high-quality outputs. As such, GANs suffer from instability and overfitting in the low-data regime. Additionally, the generated samples often concentrate around modes most commonly seen in the data, making it challenging to generate images of rare classes. While it may be possible to sample from rare modes using importance sampling, the diversity of these images would be severely limited.

Because of the high cost and difficulty of collecting large datasets, there is a need for models which can synthesize diverse images using only limited training data. GAN-based adaptation methods, however, still require target training data in the range of 1k-10k samples, which can be limiting in many practical settings.

Certain existing techniques are able to adapt with smaller amounts of training data. However, these techniques use undesirable base models such as GLO (Bojanowski, P., Joulin, A., Lopez-Paz, D., Szlam, A.: Optimizing the latent space of generative networks. arXiv preprint arXiv:1707.05776 (2017)), which can lead to blurry samples due to the use of pixel-wise loss. Likewise, invertible flow based models have been shown to adapt to new domains with limited samples (see Gambardella, A., Baydin, A.G., Torr, P.H.S.: Transflow learning: repurposing flow models without retraining. In: arXiv (2019)). However, invertible flow models require compute- and memory-intensive architectures with latent spaces of the same dimensionality as data.

"Transferring GANs: generating images from limited data" (Y. Wang et al., arXiv:1805.01677) discloses domain adaptation applied to image generation with generative adversarial networks. Several aspects of domain adaptation are evaluated, including the impact of target domain size, the relative distance between source and target domain, and the initialization of conditional GANs. The results show that using knowledge from pre-trained networks can shorten the convergence time and can significantly improve the quality of the generated images, especially when the target data is limited.

EP3629250 A1 discloses systems and methods that enable parameter-efficient transfer learning, multi-task learning, and/or other forms of model re-purposing such as model personalization or domain adaptation. In particular, as one example, a computing system can obtain a machine-learned model that has been previously trained on a first training dataset to perform a first task. The machine-learned model can include a first set of learnable parameters. The computing system can modify the machine-learned model to include a model patch, where the model patch includes a second set of learnable parameters. The computing system can train the machine-learned model on a second training dataset to perform a second task that is different from the first task, which may include learning new values for the second set of learnable parameters included in the model patch while keeping at least some (e.g., all) of the first set of parameters fixed.

SUMMARY

The invention is defined in the appended claims.

Aspects and advantages of embodiments of the present disclosure will be set forth in part in the following description, or can be learned from the description, or can be learned through practice of the embodiments.

One example aspect of the present disclosure is directed to a computer-implemented method for performing domain adaptation for generative models. The method includes obtaining, by a computing system comprising one or more computing devices, a pre-trained generative adversarial network that has been trained on a source domain training dataset to generate outputs in a source domain, wherein the pre-trained generative adversarial network comprises a generator model having a first plurality of pre-trained parameters and a discriminator model having second plurality of pre-trained parameters. The method includes modifying, by the computing system, the pre-trained generative adversarial network to obtain a modified generative adversarial network. Modifying, by the computing system, the pre-trained generative adversarial network comprises one or both of: adding, by the computing system, one or more first additional parameters to the generator model; and adding, by the computing system, one or more second additional parameters to the discriminator model. The method includes accessing, by the computing system, a target domain training dataset associated with a target domain that is different from the source domain. The method includes training, by the computing system, the modified generative adversarial network on the target domain training dataset to generate outputs in the target domain, wherein training, by the computing system, the modified generative adversarial network comprises modifying, by the computing system, at least one of the one or more first additional parameters or the one or more second additional parameters. The method includes outputting, by the computing system, the modified generative adversarial network as a trained model.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

BRIEF DESCRIPTION OF THE DRAWINGS

Detailed discussion of embodiments directed to one of ordinary skill in the art is set forth in the specification, which makes reference to the appended figures, in which:

> Figures 1A-B depict example uses of generative adversarial models which have been subjected to domain adaptation according to example embodiments of the present disclosure.
> Figures 2A-B depict graphical diagrams of a pretrained generative adversarial network according to example embodiments of the present disclosure.
> Figures 2C-D depict graphical diagrams of a generative adversarial network which has been subjected to domain adaptation according to example embodiments of the present disclosure.
> Figures 3A-D depict graphical diagrams of example adaptation blocks according to example embodiments of the present disclosure.
> Figures 4A-B depict graphical diagrams of a domain adaptation process for a generative adversarial network according to example embodiments of the present disclosure.
> Figures 5A-B show example experimental results according to example embodiments of the present disclosure.
> Figure 6A depicts a block diagram of an example computing system according to example embodiments of the present disclosure.
> Figure 6B depicts a block diagram of an example computing device according to example embodiments of the present disclosure.
> Figure 6C depicts a block diagram of an example computing device according to example embodiments of the present disclosure.
> Figure 7 depicts a flow chart diagram of an example method to perform domain adaptation for GANs according to example embodiments of the present disclosure.

Reference numerals that are repeated across plural figures are intended to identify the same features in various implementations.

DETAILED DESCRIPTION

Overview

The present disclosure proposes improved methods for learning a generative model with limited training data. In particular, example implementations of the present disclosure leverage a pre-trained GAN model from a related domain and adapt it to the new domain given a set of target examples from the new or target domain. As one example, additional parameters can be added to the pre-trained GAN model and the model can be re-trained on the set of target examples from the target domain. Thus, to mitigate the data requirement, the present disclosure provides systems and methods (some of which may be referred to as *"FewShotGAN"*) to generate images of a new concept in a few-shot setting.

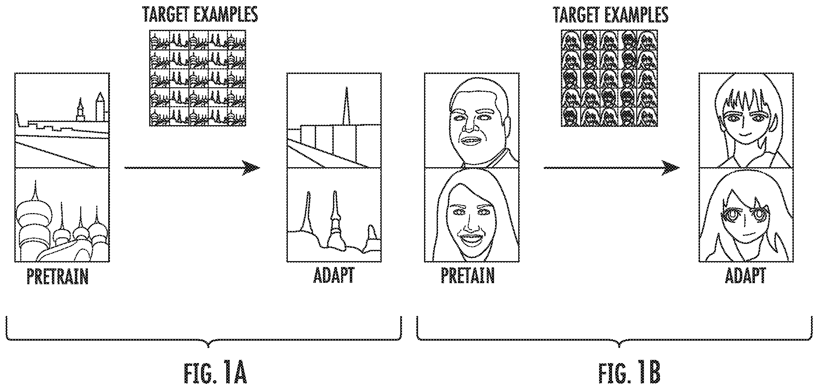

As examples, Figures 1A-B depict example uses of generative adversarial models which have been subjected to domain adaptation according to example embodiments of the present disclosure. Specifically, a pre-trained GAN that has been trained on a source domain training dataset to generate outputs in a source domain can be adapted (e.g., by addition of one or more additional parameters to the GAN) and re-trained on a target domain training dataset associated with a target domain that is different from the source domain. After re-training, the modified GAN can generate outputs in the target domain. Thus, some example implementations of the proposed systems and methods leverage base models pre-trained on a source domain with abundant images and evolve the base model with residual adapters to generate images in a target domain.

Aspects of the present disclosure enable domain transfer in the much more restricted setting of 1-25 training images (e.g., which may be referred to as "few-shot" learning), compared with earlier GAN-based methods which require an order of magnitude higher number of training samples. Specifically, training methods are proposed which prevents overfitting to the small target training set, yielding a model that can generate semantically diverse images in the target domain by leveraging the characteristics of the distribution induced by the pre-trained generator.

In addition, the proposed methods also allow for control of the degree of transfer and interpolation between domains. For example, a proposed Perceptual Path Gradient Sparsity metric can be used to explicitly measure how smooth the latent space interpolation is (and thereby correlates well with the level of overfitting). By monitoring the PPGS metric (or similar metric), model re-training can be stopped when a desired degree of transfer or interpolation between domains is reached.

In some implementations, the proposed methods make use of a GAN model pre-trained on a source domain that is a related domain or the closest available domain relative to the target domain. For example, if the goal is to synthesize face images for under-represented attributes (e.g., faces with glasses on, faces with occlusions), a GAN that is pre-trained on publicly available face images (e.g., which do not necessarily have any substantial number images with these under-representation attributes) can be used as the initial pretrained model. Next, additional parameters can be added to this pre-trained model. These additional parameters can be trained using the limited training samples from the new domain (e.g., faces having the under-represented attribute). For example, the additional parameters can be trained while keeping the original parameters frozen to the pre-trained values.

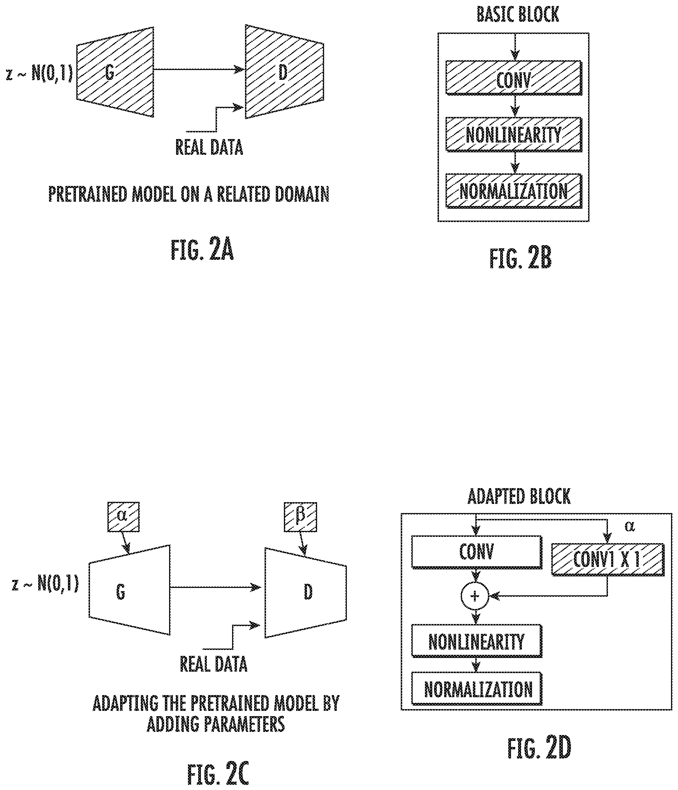

One example of this process is depicted in Figures 2A-D where these additional parameters are denoted as $\alpha$ for the generator and $\beta$ for the discriminator. In particular, Figures 2A and 2B show the architecture of a pretrained model: G and D denote generator and discriminator, respectively. Figures 2C and 2D depicts an example adaptation on the pretrained model via newly introduced parameters $\alpha$ and $\beta$. Blocks with hatching depict trainable parameters, and blocks without hatching indicate frozen parameters.

Figures 2B and 2D also show example functional forms of a layer in the generator and discriminator for pre-trained and adapted network, respectively. In the example illustrated in Figure 2D, additional filters are added in each layer whose output is added to the output of original convolutional filters before passing it to the nonlinearity.

According to another aspect of the present disclosure, some example implementations also regularize the newly added parameters (e.g., parameters $\alpha$ and $\beta$) by penalizing their norms (e.g., during the re-training). This is done so that the new parameters do not overfit to the limited training data from the new domain and the generative and discriminative mappings do not move too far away from their pre-trained counterparts. In some implementations, the regularization penalty for the adapted parameters can be tuned or adjusted to balance overfitting (small penalty) versus mode collapse (large penalty).

Various norms can be used for regularization, including L1, L2, and/or group norms. Group norms are useful in zeroing out groups of parameters simultaneously. For example, parameters corresponding to each layer can be collected together to form groups which correspond to the layers. This is also helpful from an interpretability perspective in identifying which layers are contributing to the adaptation. Some example implementations also use a low-rank approximation for the adapter parameters (e.g., parameters $\alpha$ and $\beta$) to further reduce the number of newly added parameters.

Additional aspects of the present disclosure identify that common metrics in cross-domain image synthesis encourage overfitting and propose a new metric and evaluation method to balance quality and diversity. For example, model selection criteria is provided that balances diversity versus quality of images. As one example, diversity can be measured using a Perceptual Path Gradient Sparsity (PPGS) metric and quality can be measured using a Frechet Inception Distance (FID). In some implementations, the PPGS metric can be added to the loss and directly optimized to encourage diversity. In yet other implementations, diversity can be encouraged via other techniques, such as, for example, regularizing the generator to produce diverse outputs depending on latent codes as described in Yang et al., Diversity-sensitive Conditional Generative Adversarial Networks, arXiv:1901.09024 (2019).

Some example implementations also apply concepts from learning without forgetting to constrain the degree of transfer. This adapts image generation toward an unseen domain while preserving diversity. Thus, the proposed techniques allow for preservation of the diverse modes of the source dataset while fitting characteristics of the target dataset.

Example implementations of the present disclosure achieve high-quality diverse image synthesis in the few-shot setting. In particular, example implementations of the present disclosure have been validated on transfer to the Char75K, LSUN, and Animefaces datasets, demonstrating transfer from English characters → Kannada characters, Churches →Towers, Cats →Dogs, and FFHQ →Anime. Sample quality was measured using FID score and diversity using Learned Perceptual Image Patch Similarity (LPISP), and it was observed that the proposed method yields significant improvements in these aspects over baselines. The proposed method is the first to demonstrate GAN domain transfer in the few-shot setting.

The systems and methods of the present disclosure can be used for many different applications or use cases. As one example, domain adaptation can be performed to personalize a GAN. For example, a GAN trained to generate generic handwriting, facial images, and/or other user-agnostic outputs can be re-trained on a small user-specific dataset to generate personalized or user-specific outputs of the same type (e.g., user-specific handwriting, facial images, and/or the like which match those of the user).

Another example application is to generate new synthetic data for underrepresented attributes. For example, a GAN trained to generate generic outputs can be re-trained on a small attribute-specific dataset to make personalized or outputs that exhibit the specific attribute. As one example, this process can be used to extend facial attributes to underrepresented ones, e.g., to generate more face images with an attribute (e.g., red hair color) that was underrepresented in the original, larger training set. This example use also has implications on fairness or addressing the bias in the training set. For example, if a particular attribute is underrepresented in the training set, the method can be used to generate more synthetic images for that underrepresented attribute, thereby reducing the bias of the training set. This approach can also be used for creating a balanced or fair evaluation set to provide metrics that cover a desired distribution well.

Other example use cases include modifying a GAN to perform style transfer, cross-modality generation, change faces to animations, or similar.

The systems and methods of the present disclosure provide a number of technical effects and benefits. As one example technical effect, the proposed domain adaptation techniques reduce the number of training rounds that need to be performed to obtain a GAN for a desired target domain. In particular, instead of completely training a new GAN from scratch, a GAN that has been pre-trained on a related domain can be repurposed or adapted to provide outputs in the desired target domain, which requires much fewer rounds of training overall relative to training a new GAN from scratch. In such fashion, computing resources which would be spent on model training or training data collection can be conserved, thereby reducing the consumption of computing resources such as processor usage, memory usage, and/or network bandwidth.

Similarly, the proposed domain adaptation techniques allow for GANs to be learned in the few-shot setting, such as when only a relatively small number of training examples are available for a target domain. Previous approaches which require training a new GAN from scratch would not provide any meaningful model capabilities in this setting. However, by enabling adaptation from a related domain, the present techniques do enable a high performing model to be learned in this setting, which represents an improved performance and functionality of a computing system in the few-shot setting.

Thus, the present disclosure proposes a training method, architecture, and evaluation metric for few-shot domain adaptation in the GAN setting. We demonstrate problems with existing metrics for the GAN domain transfer setting and demonstrate improved performance in a variety of transfer settings using our evaluation metric for early stopping.

Example Techniques for Domain Adaptation

This section first describes the construction of baselines, and then details the architecture and training methods for few-shot image synthesis.

Example Baselines

*Transferring GANs:* One example baseline is the fine-tuning method used in the StyleGAN2 architecture in the following paper: Wang et al.: Transferring gans: generating images from limited data. In: ECCV (2018). Note that the authors did not validate results in the few-shot setting. Example experiments found that replicating their training procedure leads to overfitting on few-shot datasets.

*Scale & Shift:* Another example baseline is the Scale & Shift method used in the StyleGAN2 architecture in the following paper: Noguchi et al.: Image generation from small datasets via batch statistics adaptations. In: ICCV (2019). This paper reported low-quality results for the Scale & Shift GAN. Example experiments also found that, even with refined training methods, this method performs poorly in comparison with other models.

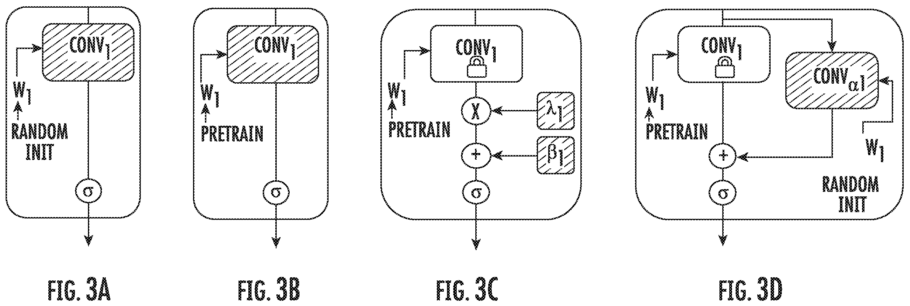

Figures 3A-D show example adaptation blocks which represent several different example options of convolutional layer design for adapting to new domains. Figure 3A: For learning a generative model on a new domain, one can train the model from scratch by using randomly initialized the weights of the convolutional layers. Figure 3B: Transferring GANs *finetunes* a pretrained model using the available samples in the target domain. Figure 3C: Scale and Shift adapts the batch statistics by scaling and shifting the feature channels (while freezing the weights of the pre-trained model). Figure 3D: Residual adaptors add one or mroe parallel convolutions to one or more layers of the network, such as the 1x1 convolution shown. Some example implementations of the present disclosure work using the residual adaptors shown in Figure 3D.

Example FewShotGAN

Example aspects of the present disclosure provide systems and methods for few-shot domain transfer in the GAN setting, which has not been addressed in prior work on GAN domain transfer. In some implementations, the capacity of the network can be limited by freezing the pretrained weights and training a limited number of adaptive domain-specific weights. Additionally, some example implementations use early-stopping based on a trade-off between diversity and quality metrics, to preserve the diversity of the pretrained network. Example pretrained models provide a prior representing a guess about the dataset to which it is wished to transfer. For this reason, choosing high-quality pretrained models whose distributions are relatively similar to the target dataset can enhance the performance of the domain transfer.

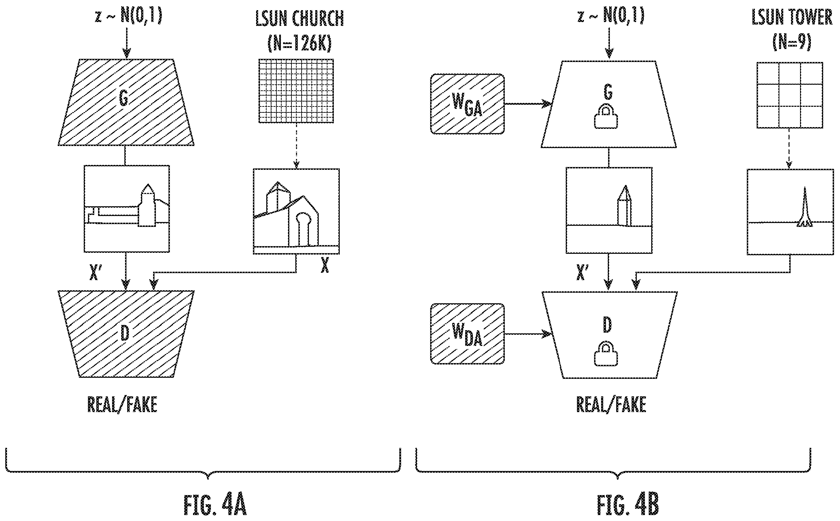

Figures 4A and 4B provide an overview of an example adaptation process. Figure 4A shows pre-training in which the generator G and discriminator D are pre-trained on a dataset where abundant examples are available (e.g., LSUN Church in the illustrated example). Some implementations follow the training process in StyleGAN (Karras et al.: A style-based generator architecture for generative adversarial networks. In: CVPR (2019)) and update the weights in boxes shown with hatching. Figure 4B shows the adaptation stage in which the pre-trained model is adapted to a new domain by, in some examples, taking the pre-trained model, freezing its model weights, and insert additional parameters such as, for example, parallel (learnable) convolutional layers for one or more of the convolutional layers in the model. In some implementations, $1 \times 1$ convolutional layers are inserted for some or all of the convolutional layers. These additional new convolutional layers can then be adapted using the few target examples (e.g., LSUN Tower in the illustrated example). Some example implementations also use a new metric for determining the optimal stopping criteria for preventing mode collapse.

Example Techniques for Limiting Network Capacity.

Some example implementations of the present disclosure limit the capacity of the network. For example, some example implementations of the present disclosure use residual adapters, which have additional parameters and can perform instance-specific, spatially-varying transformations. Example experiments demonstrated that this increased expressive capacity leads to higher quality images compared to the Scale & Shift baseline. It was also found that the limited capacity of the adaptive parameters prevents overfitting in the few-shot regime when compared with the Transferring GANs baseline.

Example Early Stopping

Some example implementations of the present disclosure use an early stopping method based on a trade-off between diversity and quality. For evaluation of image quality, FID can be used, which measures the distribution distance between generated and real images (see Martin Heusel, Hubert Ramsauer, T.U.B.N. S.H.: Gans trained by a two time-scale update rule converge to a local nash equilibrium. In: NeurIPS (2017)).

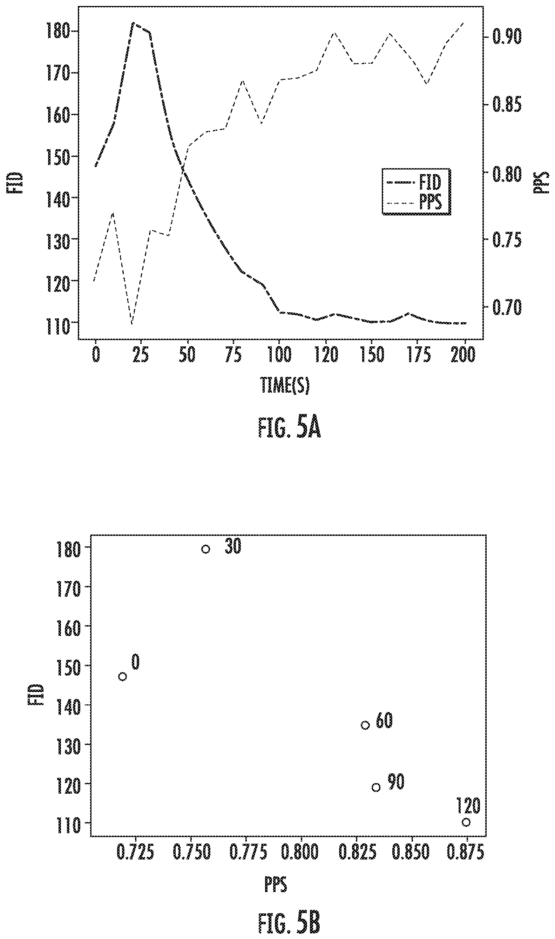

However, FID does not adequately penalize overfitting. Although the optimal FID scores occur at t > 100 (see Figure 5A), interpolation in latent space demonstrates abrupt mode shift. Comparison with the reals verifies that the modes correspond closely to training data.

In view of the above, the present disclosure proposes Perceptual Path Gradient Sparsity (PPGS), a new metric for measuring overfitting by quantifying these abrupt mode shifts. In the overfitting case, the gradients of perceptual distance along a continuous path in latent space will tend towards two modes: near-zero, or very large. To quantify this phenomenon, the Gini Index can be used, which measures statistical dispersion or sparsity within a distribution. Hurley, N., Rickard, S.: Comparing measures of sparsity. IEEE Transactions on Information Theory 55(10), 4723{4741 (2009) To compute PPGS, a number of perceptual path gradients can be randomly sampled:

$$S = \frac{P(G(Z_1), G(Z_1 + \varepsilon \frac{Z_2 - Z_1}{||Z_2 - Z_1||}))}{\varepsilon} \qquad (1)$$

where $Z_1$, $Z_2 \sim N(0,1)$ are random vectors input to the generator, P is the perceptual distance model from Zhang et al.: The unreasonable effectiveness of deep features as a perceptual metric. In: CVPR (2018), and $\varepsilon$ is a scalar distance in latent space. PPGS can be computed by taking measuring sparsity of the perceptual path gradients using the Gini index:

$$PPGS = GINI(S)$$

$$= \frac{\frac{1}{n^2} \Sigma_i^N \Sigma_j^n (S_i - S_j)^2}{2E[S]} \qquad (2)$$

PPGS is bounded [0, 1] for non-negative mean $E[S]$, and may be larger for negative $E[S]$. Larger values are more sparse, indicating overfitting. This metric can be used to determine a stopping point for training.

To provide an example illustration, Figures 5A and 5B show measuring overfitting by Perceptual Path Gradient Sparsity (PPGS). Figure 5A shows FID and PPGS over time. Figure 5B shows FID/PPGS at selected time. Figure 5A and 5B show that the commonly used FID score does not adequately reflect the degrees of overfitting. The FID scores continue to decrease over the training time steps. However, through the latent-space interpolation sudden transitions can be observed in the generated images using smoothly interpolated latent features. This suggests that the trained model suffers from mode collapse (unable to capture the space of sample distribution). On the other hand, the proposed Perceptual Path Gradient Sparsity metric explicitly measures how smooth the latent space interpolation is (and thereby correlates well with the level of overfitting). Lower is better for both metrics.

Example Ideas from Learning Without Forgetting

Some example implementations of the present disclosure adapt concepts from learning without forgetting to the few-shot image synthesis setting. For example, the residual adapter module can be used in the GAN setting, e.g., as illustrated in Figure 3D. The residual adapter module computes a residual bias at each layer of the network, which is added to the frozen pretrained weights. This idea applied to the few-shot domain transfer setting can operate to limit overfitting to the target set.

Example Implementation Details

The StyleGAN2 architecture and corresponding pretrained checkpoints can be used as a base. The residual adapters can be implemented as a residual 1x1 convolution in parallel with each existing convolution in the network. The scale & shift GAN baseline can be implemented as a trainable scale & shift operation after each convolution.

*Hyper-parameter selection.* The number of training iterations can be chosen based on the PPSG. If there is a sudden increase in PPSG, that indicates overfitting, and training can be stopped.

*Training.* An s-shot subset of a larger dataset can be created to train on. Mirror augmentation can be used, for example, for the towers, dogs, and animefaces datasets. The learning rate can be decreased to prevent instability and overfitting, and the maximum number of training images seen can be reduced to 500K. Other training details can be matched with StyleGAN2.

*Testing.* Quality can be evaluated using FID and diversity can be evaluated using the PPSG metric. FID can be measured with respect to large dataset $X_n$ from which the few-shot training data $X_s$ is sampled.

Example Devices and Systems

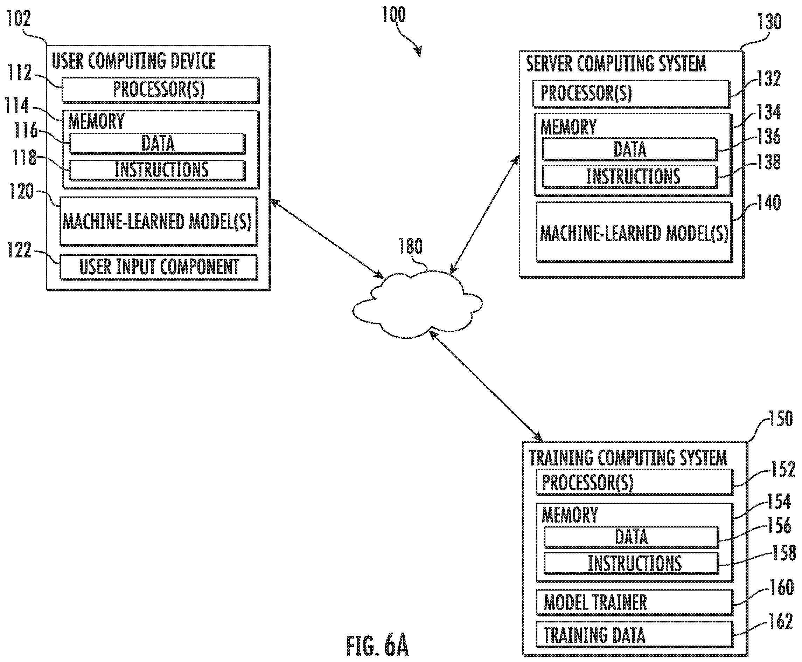

Figure 6A depicts a block diagram of an example computing system 100 according to example embodiments of the present disclosure. The system 100 includes a user computing device 102, a server computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 includes one or more processors 112 and a memory 114. The one or more processors 112 can be any suitable processing device (e.g., a processor core, a microprocessor, an ASIC, a FPGA, a controller, a microcontroller, etc.) and can be one processor or a plurality of processors that are operatively connected. The memory 114 can include one or more non-transitory computer-readable storage mediums, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

In some implementations, the user computing device 102 can store or include one or more machine-learned models 120. For example, the machine-learned models 120 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks.

In some implementations, the one or more machine-learned models 120 can be received from the server computing system 130 over network 180, stored in the user computing device memory 114, and then used or otherwise implemented by the one or more processors 112. In some implementations, the user computing device 102 can implement multiple parallel instances of a single machine-learned model 120.

Additionally or alternatively, one or more machine-learned models 140 can be included in or otherwise stored and implemented by the server computing system 130 that communicates with the user computing device 102 according to a client-server relationship. For example, the machine-learned models 140 can be implemented by the server computing system 140 as a portion of a web service. Thus, one or more models 120 can be stored and implemented at the user computing device 102 and/or one or more models 140 can be stored and implemented at the server computing system 130.

The user computing device 102 can also include one or more user input component 122 that receives user input. For example, the user input component 122 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 130 includes one or more processors 132 and a memory 134. The one or more processors 132 can be any suitable processing device (e.g., a processor core, a microprocessor, an ASIC, a FPGA, a controller, a microcontroller, etc.) and can be one processor or a plurality of processors that are operatively connected. The memory 134 can include one or more non-transitory computer-readable storage mediums, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more machine-learned models 140. For example, the models 140 can be or can otherwise include various machine-learned models. Example machine-learned models include neural networks or other multi-layer non-linear models. Example neural networks include feed forward neural networks, deep neural networks, recurrent neural networks, and convolutional neural networks.

The user computing device 102 and/or the server computing system 130 can train the models 120 and/or 140 via interaction with the training computing system 150 that is communicatively coupled over the network 180. The training computing system 150 can be separate from the server computing system 130 or can be a portion of the server computing system 130.

The training computing system 150 includes one or more processors 152 and a memory 154. The one or more processors 152 can be any suitable processing device (e.g., a processor core, a microprocessor, an ASIC, a FPGA, a controller, a microcontroller, etc.) and can be one processor or a plurality of processors that are operatively connected. The memory 154 can include one or more non-transitory computer-readable storage mediums, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 120 and/or 140 stored at the user computing device 102 and/or the server computing system 130 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the machine-learned models 120 and/or 140 based on a set of training data 162. The training data 162 can include, for example, samples from both a source domain and a target domain, respectively.

In some implementations, if the user has provided consent, the training examples can be provided by the user computing device 102. Thus, in such implementations, the model 120 provided to the user computing device 102 can be trained by the training computing system 150 on user-specific data received from the user computing device 102. In some instances, this process can be referred to as personalizing the model.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM hard disk or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

Figure 6A illustrates one example computing system that can be used to implement the present disclosure. Other computing systems can be used as well. For example, in some implementations, the user computing device 102 can include the model trainer 160 and the training dataset 162. In such implementations, the models 120 can be both trained and used locally at the user computing device 102. In some of such implementations, the user computing device 102 can implement the model trainer 160 to personalize the models 120 based on user-specific data.

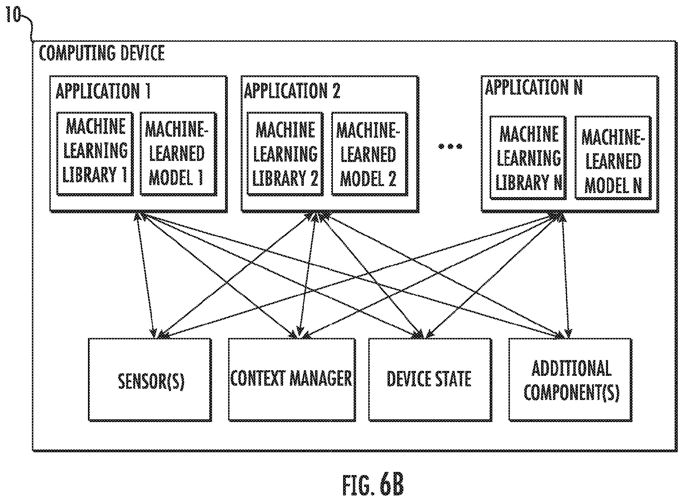

Figure 6B depicts a block diagram of an example computing device 10 that performs according to example embodiments of the present disclosure. The computing device 10 can be a user computing device or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 6B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

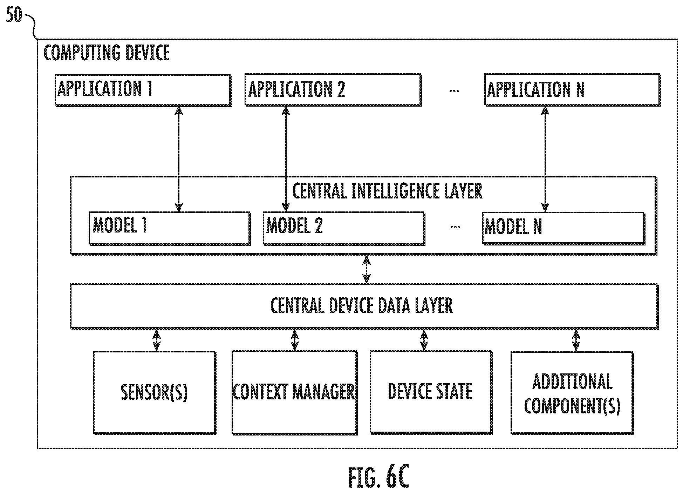

Figure 6C depicts a block diagram of an example computing device 50 that performs according to example embodiments of the present disclosure. The computing device 50 can be a user computing device or a server computing device.

The computing device 50 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 6C, a respective machine-learned model (e.g., a model) can be provided for each application and managed by the central intelligence layer. In other implementations, two or more applications can share a single machine-learned model. For example, in some implementations, the central intelligence layer can provide a single model (e.g., a single model) for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 6C, the central device data layer can communicate with a number of other components of the computing device, such as, for example, one or more sensors, a context manager, a device state component, and/or additional components. In some implementations, the central device data layer can communicate with each device component using an API (e.g., a private API).

Example Methods

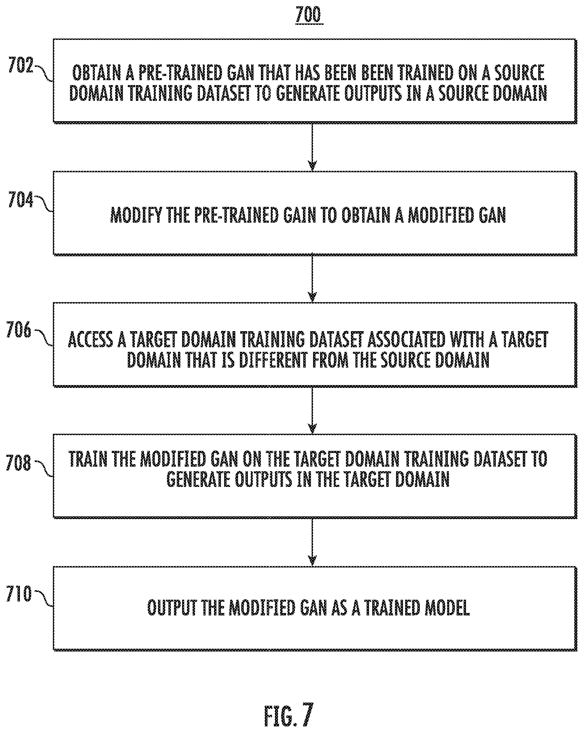

Figure 7 depicts a flow chart diagram of an example method 700 to perform domain adaptation for GANs according to example embodiments of the present disclosure. Although Figure 7 depicts steps performed in a particular order for purposes of illustration and discussion, the methods of the present disclosure are not limited to the particularly illustrated order or arrangement. The various steps of the method 700 can be omitted, rearranged, combined, and/or adapted in various ways without deviating from the scope of the present disclosure.

At 702, the method can include obtaining, by a computing system comprising one or more computing devices, a pre-trained generative adversarial network that has been trained on a source domain training dataset to generate outputs in a source domain. The pre-trained generative adversarial network can include a generator model having a first plurality of pre-trained parameters and a discriminator model having second plurality of pre-trained parameters.

At 704, the method can include modifying, by the computing system, the pre-trained generative adversarial network to obtain a modified generative adversarial network. Modifying, by the computing system, the pre-trained generative adversarial network can include one or both of: adding, by the computing system, one or more first additional parameters to the generator model; and adding, by the computing system, one or more second additional parameters to the discriminator model.

In some implementations, modifying, by the computing system, the pre-trained generative adversarial network can include both: adding, by the computing system, the one or more first additional parameters to the generator model; and adding, by the computing system, the one or more second additional parameters to the discriminator model.

In some implementations, adding, by the computing system, the one or more first additional parameters to the generator model can include adding, by the computing system, one or more parallel residual layers to a first convolutional neural network of the generator model. In some implementations, adding, by the computing system, the one or more second additional parameters to the discriminator model can include adding, by the computing system, one or more parallel residual layers to a second convolutional neural network of the discriminator model.

At 706, the method can include accessing, by the computing system, a target domain training dataset associated with a target domain that is different from the source domain.

In some implementations, the target domain training dataset comprises 25 or fewer target training examples of the target domain.

In some implementations, the source domain comprises a first image domain and the target domain comprises a second image domain that is different from the first image domain.

In some implementations, the source domain comprises a generic domain with population-generic samples and the target domain comprises a personalized domain with user-specific samples.

In some implementations, the source domain comprises a generic domain with population-generic samples and the target domain comprises an underrepresented domain with samples exhibiting a particular characteristic that is underrepresented within the population-generic samples.

In some implementations, the source domain comprises a generic facial domain with generic facial image samples and the target domain comprises a facial characteristic domain with image samples exhibiting a particular facial characteristic.

At 708, the method can include training, by the computing system, the modified generative adversarial network on the target domain training dataset to generate outputs in the target domain. Training, by the computing system, the modified generative adversarial network can include modifying, by the computing system, at least one of the one or more first additional parameters or the one or more second additional parameters.

In some implementations, modifying, by the computing system, at least one of the one or more first additional parameters or the one or more second additional parameters can include modifying, by the computing system, at least one of the one or more first additional parameters or the one or more second additional parameters while holding the first plurality of pre-trained parameters and the second plurality of pre-trained parameters fixed.

In some implementations, training, by the computing system, the modified generative adversarial network on the target domain training dataset can include applying, by the computing system, a penalization to one or more norms of the one or more first additional parameters or the one or more second additional parameters to regularize the one or more first additional parameters or the one or more second additional parameters.

In some implementations, the one or more first additional parameters or the one or more second additional parameters can be organized into a plurality of groups that respectively correspond to a plurality of layers of the modified generative adversarial network. In some of such implementations, applying, by the computing system, the penalization to the one or more norms can include: applying, by the computing system, a first penalization to a respective L2 norm within one or more of the plurality of groups; and/or applying, by the computing system, a second penalization to a respective L1 norm between two or more of the plurality of groups.

In some implementations, training, by the computing system, the modified generative adversarial network on the target domain training dataset can include applying, by the computing system, an early stopping scheme that measures both diversity of generated samples and quality of generated samples.

In some implementations, training, by the computing system, the modified generative adversarial network on the target domain training dataset can include optimizing, by the computing system, a minimax objective function.

At 710, the method can include outputting, by the computing system, the modified generative adversarial network as a trained model.

Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure.

**Claims**

1. A computer-implemented method for performing domain adaptation for generative models of images, the method comprising:

obtaining (702), by a computing system comprising one or more computing devices, a pre-trained generative adversarial network that has been trained on a source domain training dataset of images to generate images in a source domain comprising a first image domain, wherein the pre-trained generative adversarial network comprises a generator model for generating images having a first plurality of pre-trained parameters and one or more convolutional layers and a discriminator model for classifying images as real or generated having second plurality of pre-trained parameters and one or more convolutional layers;
modifying (704), by the computing system, the pre-trained generative adversarial network to obtain a modified generative adversarial network, wherein modifying, by the computing system, the pre-trained generative adversarial network comprises one or both of:

adding, by the computing system, one or more first additional parameters to the generator model, comprising adding one or more parallel convolutional layers to the convolutional layers of the generator model; and
adding, by the computing system, one or more second additional parameters to the discriminator model, comprising adding one or more parallel convolutional layers to the convolutional layers of the discriminator model;

accessing (706), by the computing system, a target domain training dataset of images associated with a target domain that is different from the source domain;
training (708), by the computing system, the modified generative adversarial network on the target domain training dataset of images to generate images in the target domain comprising a second image domain that is different from the first image domain, wherein training, by the computing system, the modified generative adversarial network comprises modifying, by the computing system, at least one of the one or more first additional parameters or the one or more second additional parameters; and outputting (710), by the computing system, the modified generative adversarial network as a trained model.

2.  The computer-implemented method of any preceding claim, wherein the target domain training dataset comprises 25 or fewer target training examples of the target domain.

3.  The computer-implemented method of any preceding claim, wherein modifying, by the computing system, at least one of the one or more first additional parameters or the one or more second additional parameters comprises modifying, by the computing system, at least one of the one or more first additional parameters or the one or more second additional parameters while holding the first plurality of pre-trained parameters and the second plurality of pre-trained parameters fixed.

4.  The computer-implemented method of any preceding claim wherein modifying, by the computing system, the pre-trained generative adversarial network comprises both:
    adding, by the computing system, the one or more first additional parameters to the generator model; and adding, by the computing system, the one or more second additional parameters to the discriminator model.

5.  The computer-implemented method of any preceding claim, wherein training, by the computing system, the modified generative adversarial network on the target domain training dataset comprises applying, by the computing system, a penalization to one or more norms of the one or more first additional parameters or the one or more second additional parameters to regularize the one or more first additional parameters or the one or more second additional parameters.

6.  The computer-implemented method of claim 5, wherein:

    the one or more first additional parameters or the one or more second additional parameters are organized into a plurality of groups that respectively correspond to a plurality of layers of the modified generative adversarial network; and applying, by the computing system, the penalization to the one or more norms comprises:

    applying, by the computing system, a first penalization to a respective L2 norm within one or more of the plurality of groups; and applying, by the computing system, a second penalization to a respective L1 norm between two or more of the plurality of groups.

7.  The computer-implemented method of any preceding claim, wherein:

    adding, by the computing system, the one or more first additional parameters to the generator model comprises adding, by the computing system, one or more parallel residual layers to a first convolutional neural network of the generator model; or adding, by the computing system, the one or more second additional parameters to the discriminator model comprises adding, by the computing system, one or more parallel residual layers to a second convolutional neural network of the discriminator model.

8.  The computer-implemented method of any preceding claim, wherein training, by the computing system, the modified generative adversarial network on the target domain training dataset comprises applying, by the computing system, an early stopping scheme that measures both diversity of generated samples using a diversity metric and quality of generated samples using a quality metric.

9.  The computer-implemented method of any preceding claim, wherein training, by the computing system, the modified generative adversarial network on the target domain training dataset comprises optimizing, by the computing system, a minimax objective function.

10. The computer-implemented method of any preceding claim, wherein:

    the source domain comprises a generic domain with population-generic samples; and the target domain comprises a personalized domain, wherein the target domain training dataset of images comprises user-specific samples.

11. The computer-implemented method of any preceding claim, wherein:

    the source domain comprises a generic domain with population-generic samples; and the target domain comprises an underrepresented domain, wherein the target domain training dataset of images comprises samples exhibiting a particular characteristic that is underrepresented within the population-generic samples.

12. The computer-implemented method of any preceding claim, wherein:

the source domain comprises a generic facial domain with generic facial image samples; and the target domain comprises a facial characteristic domain with image samples exhibiting a particular facial characteristic.

13. A computing system (50) configured to perform the method of any preceding claim.

14. One or more non-transitory computer-readable media that collectively store a modified generative adversarial network that has been trained to generate images according to the method of any one of claims 1-12, wherein the one or more non-transitory computer readable media collectively comprise instructions which, when executed by a processor, cause the processor to carry out the modified generative adversarial network configured to generate images.

**Patentansprüche**

1. Computerimplementiertes Verfahren zum Durchführen von Domänenadaption für generative Modelle von Bildern, wobei das Verfahren Folgendes umfasst:

Erhalten (702), durch ein Rechensystem, das eine oder mehrere Rechenvorrichtungen umfasst, eines vortrainierten generativen adversarialen Netzwerks, das auf einem Trainingsdatensatz von Bildern einer Quelldomäne trainiert wurde, um Bilder in einer Quelldomäne zu generieren, die eine erste Bilddomäne umfasst, wobei das vortrainierte generative adversariale Netzwerk ein Generatormodell zum Generieren von Bildern, das eine erste Vielzahl von vortrainierten Parametern und eine oder mehrere Faltungsschichten aufweist, und ein Diskriminatormodell zum Klassifizieren von Bildern als real oder generiert, das eine zweite Vielzahl von vortrainierten Parametern und eine oder mehrere Faltungsschichten aufweist, umfasst; Modifizieren (704), durch das Rechensystem, des vortrainierten generativen adversarialen Netzwerks, um ein modifiziertes generatives adversariales Netzwerk zu erhalten, wobei das Modifizieren, durch das Rechensystem, des vortrainierten generativen adversarialen Netzwerks eines oder beide der Folgenden umfasst:

Hinzufügen, durch das Rechensystem, eines oder mehrerer erster zusätzlicher Parameter zu dem Generatormodell, umfassend das Hinzufügen einer oder mehrerer paralleler Faltungsschichten zu den Faltungsschichten des Generatormodells; und Hinzufügen, durch das Rechensystem, eines oder mehrerer zweiter zusätzlicher Parameter zu dem Diskriminatormodell, umfassend das Hinzufügen einer oder mehrerer paralleler Faltungsschichten zu den Faltungsschichten des Diskriminatormodells; Zugreifen (706), durch das Rechensystem, auf einen Trainingsdatensatz von Bildern einer Zieldomäne, der einer Zieldomäne zugeordnet ist, die sich von der Quelldomäne unterscheidet; Trainieren (708), durch das Rechensystem, des modifizierten generativen adversarialen Netzwerks auf dem Trainingsdatensatz von Bildern der Zieldomäne, um Bilder in der Zieldomäne zu generieren, die eine zweite Bilddomäne umfasst, die sich von der ersten Bilddomäne unterscheidet, wobei das Trainieren, durch das Rechensystem, des modifizierten generativen adversarialen Netzwerks das Modifizieren, durch das Rechensystem, von mindestens einem des einen oder der mehreren ersten zusätzlichen Parameter oder des einen oder der mehreren zweiten zusätzlichen Parameter umfasst; und Ausgeben (710), durch das Rechensystem, des modifizierten generativen adversarialen Netzwerks als trainiertes Modell.

2. Computerimplementiertes Verfahren nach einem der vorhergehenden Ansprüche, wobei der Trainingsdatensatz der Zieldomäne 25 oder weniger Trainingsbeispiele der Zieldomäne umfasst.

3. Computerimplementiertes Verfahren nach einem der vorhergehenden Ansprüche, wobei das Modifizieren, durch das Rechensystem, von mindestens einem des einen oder der mehreren ersten zusätzlichen Parameter oder des einen oder der mehreren zweiten zusätzlichen Parameter das Modifizieren, durch das Rechensystem, von mindestens einem des einen oder der mehreren ersten zusätzlichen Parameter oder des einen oder der mehreren zweiten zusätzlichen Parameter umfasst, während die erste Vielzahl von vortrainierten Parametern und die zweite Vielzahl von vortrainierten Parametern festgehalten werden.

**4.** Computerimplementiertes Verfahren nach einem der vorhergehenden Ansprüche, wobei das Modifizieren, durch das Rechensystem, des vortrainierten generativen adversarialen Netzwerks beides umfasst: das Hinzufügen, durch das Rechensystem, des einen oder der mehreren ersten zusätzlichen Parameter zu dem Generatormodell; und das Hinzufügen, durch das Rechensystem, des einen oder der mehreren zweiten zusätzlichen Parameter zu dem Diskriminatormodell.

**5.** Computerimplementiertes Verfahren nach einem der vorhergehenden Ansprüche, wobei das Trainieren, durch das Rechensystem, des modifizierten generativen adversarialen Netzwerks auf dem Trainingsdatensatz der Zieldomäne das Anwenden, durch das Rechensystem, einer Penalisierung auf eine oder mehrere Normen des einen oder der mehreren ersten zusätzlichen Parameter oder des einen oder der mehreren zweiten zusätzlichen Parameter umfasst, um den einen oder die mehreren ersten zusätzlichen Parameter oder den einen oder die mehreren zweiten zusätzlichen Parameter zu regularisieren.

**6.** Computerimplementiertes Verfahren nach Anspruch 5, wobei:

der eine oder die mehreren ersten zusätzlichen Parameter oder der eine oder die mehreren zweiten zusätzlichen Parameter in einer Vielzahl von Gruppen organisiert sind, die jeweils einer Vielzahl von Schichten des modifizierten generativen adversarialen Netzwerks entsprechen; und
das Anwenden, durch das Rechensystem, der Penalisierung auf die eine oder mehrere Normen Folgendes umfasst:

das Anwenden, durch das Rechensystem, einer ersten Penalisierung auf eine jeweilige L2-Norm innerhalb einer oder mehrerer der Vielzahl von Gruppen; und
das Anwenden, durch das Rechensystem, einer zweiten Penalisierung auf eine jeweilige L1-Norm zwischen zwei oder mehr der Vielzahl von Gruppen.

**7.** Computerimplementiertes Verfahren nach einem der vorhergehenden Ansprüche, wobei:

das Hinzufügen, durch das Rechensystem, des einen oder der mehreren ersten zusätzlichen Parameter zu dem Generatormodell das Hinzufügen, durch das Rechensystem, einer oder mehrerer paralleler Residualschichten zu einem ersten neuronalen Faltungsnetzwerk des Generatormodells umfasst; oder

das Hinzufügen, durch das Rechensystem, des einen oder der mehreren zweiten zusätzlichen Parameter zu dem Diskriminatormodell das Hinzufügen, durch das Rechensystem, einer oder mehrerer paralleler Residualschichten zu einem zweiten neuronalen Faltungsnetzwerk des Diskriminatormodells umfasst.

**8.** Computerimplementiertes Verfahren nach einem der vorhergehenden Ansprüche, wobei das Trainieren, durch das Rechensystem, des modifizierten generativen adversarialen Netzwerks auf dem Trainingsdatensatz der Zieldomäne das Anwenden, durch das Rechensystem, eines Frühstoppschemas umfasst, das sowohl die Diversität generierter Muster unter Verwendung einer Diversitätsmetrik als auch die Qualität generierter Muster unter Verwendung einer Qualitätsmetrik misst.

**9.** Computerimplementiertes Verfahren nach einem der vorhergehenden Ansprüche, wobei das Trainieren, durch das Rechensystem, des modifizierten generativen adversarialen Netzwerks auf dem Trainingsdatensatz der Zieldomäne das Optimieren, durch das Rechensystem, einer Minimax-Zielfunktion umfasst.

**10.** Computerimplementiertes Verfahren nach einem der vorhergehenden Ansprüche, wobei:

die Quelldomäne eine generische Domäne mit populationsgenerischen Mustern umfasst; und die Zieldomäne eine personalisierte Domäne umfasst, wobei der Trainingsdatensatz von Bildern der Zieldomäne benutzerspezifische Muster umfasst.

**11.** Computerimplementiertes Verfahren nach einem der vorhergehenden Ansprüche, wobei:

die Quelldomäne eine generische Domäne mit populationsgenerischen Mustern umfasst; und die Zieldomäne eine unterrepräsentierte Domäne umfasst, wobei der Trainingsdatensatz von Bildern der Zieldomäne Muster umfasst, die ein bestimmtes Merkmal aufweisen, das innerhalb der populationsgenerischen Muster unterrepräsentiert ist.

**12.** Computerimplementiertes Verfahren nach einem der vorhergehenden Ansprüche, wobei:

die Quelldomäne eine generische Gesichtsdomäne mit generischen Gesichtsbildmustern umfasst; und
die Zieldomäne eine Gesichtsmerkmaldomäne mit Bildmustern umfasst, die ein bestimmtes Gesichtsmerkmal aufweisen.

**13.** Rechensystem (50), das konfiguriert ist, das Verfahren nach einem der vorhergehenden Ansprüche auszuführen.

**14.** Ein oder mehrere nichtflüchtige computerlesbare Medien, die gemeinsam ein modifiziertes generatives adversariales Netzwerk speichern, das trainiert wurde, um Bilder gemäß dem Verfahren nach einem der Ansprüche 1-12 zu generieren, wobei das eine oder die mehreren nichtflüchtigen computerlesbaren Medien gemeinsam Anweisungen umfassen, die, wenn sie durch einen Prozessor ausgeführt werden, den Prozessor veranlassen, das modifizierte generative adversariale Netzwerk auszuführen, das konfiguriert ist, Bilder zu generieren.

**Revendications**

**1.** Procédé mis en œuvre par ordinateur pour la réalisation de l'adaptation de domaine pour modèles génératifs d'images, le procédé comprenant :

l'obtention (702), par un système informatique comprenant un ou plusieurs dispositifs informatiques, d'un réseau antagoniste génératif préentraîné qui a été entraîné sur un ensemble de données d'entraînement de domaine source d'images pour générer des images dans un domaine source comprenant un premier domaine d'image, dans lequel le réseau antagoniste génératif pré-entraîné comprend un modèle générateur pour générer des images ayant une première pluralité de paramètres pré-entraînés et une ou plusieurs couches convolutionnelles et un modèle discriminateur pour classer les images comme réelles ou générées ayant une seconde pluralité de paramètres pré-entraînés et une ou plusieurs couches convolutionnelles ;
la modification (704), par le système informatique, du réseau antagoniste génératif préentraîné pour obtenir un réseau antagoniste génératif modifié, dans lequel la modification, par le système informatique, du réseau antagoniste génératif pré-entraîné comprend l'un ou les deux :

de l'ajout, par le système informatique, d'un ou de plusieurs premiers paramètres supplémentaires au modèle générateur, comprenant l'ajout d'une ou de plusieurs couches convolutionnelles parallèles aux couches convolutionnelles du modèle générateur ; et
de l'ajout, par le système informatique, d'un ou de plusieurs seconds paramètres supplémentaires au modèle discriminateur, comprenant l'ajout d'une ou de plusieurs couches convolutionnelles parallèles aux couches convolutionnelles du modèle discriminateur ;
l'accès (706), par le système informatique, à un ensemble de données d'entraînement de domaine cible d'images associées à un domaine cible différent du domaine source ;
l'entraînement (708), par le système informatique, du réseau antagoniste génératif modifié sur l'ensemble de données d'entraînement d'images du domaine cible pour générer des images dans le domaine cible comprenant un second domaine d'images différent du premier domaine d'images, dans lequel l'entraînement, par le système informatique, du réseau antagoniste génératif modifié comprend la modification, par le système informatique, d'au moins l'un des un ou plusieurs premiers paramètres supplémentaires ou des un ou plusieurs seconds paramètres supplémentaires ; et
la délivrance en sortie (710), par le système informatique, du réseau antagoniste génératif modifié comme modèle entraîné.

**2.** Procédé mis en œuvre par ordinateur selon une quelconque revendication précédente, dans lequel l'ensemble de données d'entraînement du domaine cible comprend 25 exemples d'entraînement cibles ou moins du domaine cible.

**3.** Procédé mis en œuvre par ordinateur selon une quelconque revendication précédente, dans lequel la modification, par le système informatique, d'au moins l'un des un ou plusieurs premiers paramètres supplémentaires ou des un ou plusieurs seconds paramètres supplémentaires comprend la modification, par le système informatique, d'au moins l'un des un ou plusieurs premiers paramètres supplémentaires ou des un ou plusieurs seconds paramètres supplémentaires tout en maintenant fixes la première pluralité de paramètres pré-entraînés et la seconde pluralité de paramètres pré-entraînés.

**4.** Procédé mis en œuvre par ordinateur selon une quelconque revendication précédente, dans lequel la modification, par le système informatique, du réseau antagoniste génératif pré-entraîné comprend à la fois : l'ajout, par le système informatique, des un ou plusieurs premiers paramètres supplémentaires au modèle générateur ; et l'ajout, par le système informatique, des un ou plusieurs seconds paramètres supplémentaires au modèle discriminateur.

**5.** Procédé mis en œuvre par ordinateur selon une quelconque revendication précédente, dans lequel l'entraînement, par le système informatique, du réseau antagoniste génératif modifié sur l'ensemble de données d'entraînement du domaine cible comprend l'application, par le système informatique, d'une pénalisation à une ou plusieurs normes des un ou plusieurs premiers paramètres supplémentaires ou des un ou plusieurs seconds paramètres supplémentaires afin de régulariser les un ou plusieurs premiers paramètres supplémentaires ou les un ou plusieurs seconds paramètres supplémentaires.

6. Procédé mis en œuvre par ordinateur selon la revendication 5, dans lequel :

les un ou plusieurs premiers paramètres supplémentaires ou les un ou plusieurs seconds paramètres supplémentaires sont organisés en une pluralité de groupes qui correspondent respectivement à une pluralité de couches du réseau antagoniste génératif modifié ; et l'application, par le système informatique, de la pénalisation aux une ou plusieurs normes comprend :

l'application, par le système informatique, d'une première pénalisation à une norme L2 respective au sein de l'un ou plusieurs de la pluralité de groupes ; et l'application, par le système informatique, d'une seconde pénalisation à une norme L1 respective entre deux ou plus de la pluralité de groupes.

7. Procédé mis en œuvre par ordinateur selon une quelconque revendication précédente, dans lequel :

l'ajout, par le système informatique, des un ou plusieurs premiers paramètres supplémentaires au modèle générateur comprend l'ajout, par le système informatique, d'une ou de plusieurs couches résiduelles parallèles à un premier réseau neuronal convolutif du modèle générateur ; ou l'ajout, par le système informatique, des un ou plusieurs seconds paramètres supplémentaires au modèle discriminateur comprend l'ajout, par le système informatique, d'une ou de plusieurs couches résiduelles parallèles à un second réseau neuronal convolutif du modèle discriminateur.

8. Procédé mis en œuvre par ordinateur selon une quelconque revendication précédente, dans lequel l'entraînement, par le système informatique, du réseau antagoniste génératif modifié sur l'ensemble de données d'entraînement du domaine cible comprend l'application, par le système informatique, d'un schéma d'arrêt précoce qui mesure à la fois la diversité des échantillons générés à l'aide d'une métrique de diversité et la qualité des échantillons générés à l'aide d'une métrique de qualité.

9. Procédé mis en œuvre par ordinateur selon une quelconque revendication précédente, dans lequel l'entraînement, par le système informatique, du réseau antagoniste génératif modifié sur l'ensemble de données d'entraînement du domaine cible comprend l'optimisation, par le système informatique, d'une fonction objectif minimax.

10. Procédé mis en œuvre par ordinateur selon une quelconque revendication précédente, dans lequel :

le domaine source comprend un domaine générique avec des échantillons génériques de population ; et le domaine cible comprend un domaine personnalisé, dans lequel l'ensemble de données d'entraînement d'images du domaine cible comprend des échantillons spécifiques à l'utilisateur.

11. Procédé mis en œuvre par ordinateur selon une quelconque revendication précédente, dans lequel :

le domaine source comprend un domaine générique avec des échantillons génériques de population ; et le domaine cible comprend un domaine sous-représenté, dans lequel l'ensemble de données d'entraînement d'images du domaine cible comprend des échantillons présentant une caractéristique particulière qui est sous-représentée au sein des échantillons génériques de la population.

12. Procédé mis en œuvre par ordinateur selon une quelconque revendication précédente, dans lequel :

le domaine source comprend un domaine facial générique avec des échantillons d'images faciales génériques ; et le domaine cible comprend un domaine de caractéristiques faciales avec des échantillons d'images présentant une caractéristique faciale particulière.

13. Système informatique (50) configuré pour réaliser le procédé selon une quelconque revendication précédente.

14. Un ou plusieurs supports non transitoires lisibles par ordinateur qui stockent collectivement un réseau antagoniste génératif modifié qui a été entraîné à générer des images selon le procédé selon l'une quelconque des revendications 1 à 12, dans lequel les un ou plusieurs supports non transitoires lisibles par ordinateur comprennent collectivement des instructions qui, lorsqu'elles sont exécutées par un processeur, amènent le processeur à réaliser le réseau antagoniste génératif modifié configuré pour générer des images.

TARGET EXAMPLES

PRETRAIN

ADAPT

FIG. 1A

TARGET EXAMPLES

PRETAIN

ADAPT

FIG. 1B

PRETRAINED MODEL ON A RELATED DOMAIN

FIG. 2A

BASIC BLOCK

FIG. 2B

ADAPTING THE PRETRAINED MODEL BY
ADDING PARAMETERS

FIG. 2C

ADAPTED BLOCK

FIG. 2D

FIG. 3A

FIG. 3B

FIG. 3C

FIG. 3D

FIG. 4A

FIG. 4B

FIG. 5A

FIG. 5B

FIG. 6A

FIG. 6B

50

COMPUTING DEVICE

APPLICATION 1    APPLICATION 2    ...    APPLICATION N

CENTRAL INTELLIGENCE LAYER

MODEL 1    MODEL 2    ...    MODEL N

CENTRAL DEVICE DATA LAYER

SENSOR(S)    CONTEXT MANAGER    DEVICE STATE    ADDITIONAL COMPONENT(S)

FIG. 6C

700

702 — OBTAIN A PRE-TRAINED GAN THAT HAS BEEN BEEN TRAINED ON A SOURCE DOMAIN TRAINING DATASET TO GENERATE OUTPUTS IN A SOURCE DOMAIN

704 — MODIFY THE PRE-TRAINED GAIN TO OBTAIN A MODIFIED GAN

706 — ACCESS A TARGET DOMAIN TRAINING DATASET ASSOCIATED WITH A TARGET DOMAIN THAT IS DIFFERENT FROM THE SOURCE DOMAIN

708 — TRAIN THE MODIFIED GAN ON THE TARGET DOMAIN TRAINING DATASET TO GENERATE OUTPUTS IN THE TARGET DOMAIN

710 — OUTPUT THE MODIFIED GAN AS A TRAINED MODEL

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3629250 A1

### Non-patent literature cited in the description

- **BOJANOWSKI, P.** ; **JOULIN, A.** ; **LOPEZ-PAZ, D.** ; **SZLAM, A.** Optimizing the latent space of generative networks. *arXiv:1707.05776*, 2017
- **GAMBARDELLA, A.** ; **BAYDIN, A.G.** ; **TORR, P.H.S.** Transflow learning: repurposing flow models without retraining. *arXiv*, 2019
- **Y. WANG et al.** Transferring GANs: generating images from limited data. *arXiv:1805.01677*
- **YANG et al.** Diversity-sensitive Conditional Generative Adversarial Networks. *arXiv:1901.09024*, 2019
- **WANG et al.** Transferring gans: generating images from limited data. *ECCV*, 2018
- **NOGUCHI et al.** Image generation from small datasets via batch statistics adaptations. *ICCV*, 2019
- **KARRAS et al.** A style-based generator architecture for generative adversarial networks. *CVPR*, 2019
- **MARTIN HEUSEL** ; **HUBERT RAMSAUER, T.U.B.N. S.H.** Gans trained by a two time-scale update rule converge to a local nash equilibrium. *NeurIPS*, 2017
- **HURLEY, N.** ; **RICKARD, S.** Comparing measures of sparsity. *IEEE Transactions on Information Theory*, 2009, vol. 55 (10), 4723
- **ZHANG et al.** The unreasonable effectiveness of deep features as a perceptual metric. *CVPR*, 2018